# DEMANDE DE BREVET EUROPEEN

(11) **EP 4 434 419 A1**
(43) Date de publication de la demande: **25.09.2024**
(21) Numéro de dépôt: 23163550.9
(22) Date de dépôt: 22.03.2023
(51) Int. Cl.: A47J 37/06, H05B 3/48

(54) **APPAREIL ELECTROMENAGER ET PROCEDE DE FONCTIONNEMENT**

(71) Demandeur: Lavafileds Group, 6180 Courcelles (BE)
(72) Inventeur: JENICOT, Jean-Marie, 1450 Chastre (BE)
(74) Mandataire: Gevers Patents

(57) **Abrégé**

L'invention concerne un appareil (20) électroménager comprenant une plaque de cuisson (11) et un élément chauffant (9) de la plaque de cuisson (11), caractérisé en ce que l'appareil (20) comprend en outre un diffuseur de chaleur (10) contre la plaque de cuisson (11), l'élément chauffant (9) étant agencé dans le diffuseur de chaleur (10) et contre la plaque de cuisson (11). L'invention concerne aussi un procédé de fonctionnement de l'appareil.

## Description

### Domaine technique

La présente invention concerne un appareil électroménager et un procédé de fonctionnement de l'appareil électroménager.

### Art antérieur

Il existe des appareils électroménagers permettant de cuire des aliments, tels que des pâtons, des pâtes pâtissières, de griller des aliments divers tels que tranches de viande, des légumes etc... Toutefois, les normes de sécurité tendent vers une limitation de la température d'échauffement de ces appareils électroménagers pour protéger les utilisateurs au contact de l'appareil.

Il y a donc un besoin pour un appareil électroménager dont la température d'échauffement au contact est limitée, tout en assurant une bonne cuisson des aliments.

### Résumé de l'invention

À cet effet, l'invention propose un appareil électroménager comprenant une plaque de cuisson, et un élément chauffant de la plaque de cuisson, caractérisé en ce que l'appareil comprend en outre un diffuseur de chaleur contre la plaque de cuisson, l'élément chauffant étant agencé dans le diffuseur de chaleur et contre la plaque de cuisson.

Selon une variante, le diffuseur de chaleur comporte une gorge avec une ouverture en direction de la plaque de cuisson, l'élément chauffant étant dans la gorge et contre la plaque de cuisson au travers de l'ouverture de la gorge.

Selon une variante, l'élément chauffant est surmoulé dans le diffuseur de chaleur.

Selon une variante, le diffuseur de chaleur est en aluminium.

Selon une variante, l'élément chauffant est serti dans le diffuseur de chaleur.

Selon une variante, l'appareil comprend en outre des ressorts sollicitant le diffuseur de chaleur contre la plaque de cuisson.

Selon une variante, les ressorts sollicitent chacun une colonne de guidage contre le diffuseur de chaleur par l'intermédiaire d'une entretoise, de préférence en céramique.

Selon une variante, l'appareil comprend en outre un thermostat régulant la température de la plaque de cuisson, le thermostat s'étendant au travers d'un passage dans le diffuseur de chaleur.

Selon une variante, le thermostat comporte un bulbe avec un évidement central, le bulbe étant en pression contre la plaque de cuisson.

Selon une variante, l'appareil comprend un axe supportant le thermostat et un ressort sollicitant le thermostat en direction de la plaque de cuisson, le bulbe étant mis en pression contre une zone centrale de la plaque de cuisson.

Selon une variante, l'appareil comprend en outre un réflecteur de chaleur, le diffuseur de chaleur étant agencé entre la plaque de cuisson et le réflecteur.

Selon une variante, l'appareil comprend en outre un capot extérieur dans lequel sont, depuis le capot extérieur, le réflecteur, le diffuseur de chaleur, l'élément chauffant et la plaque de cuisson, le réflecteur formant un écran thermique entre le capot extérieur et le diffuseur de chaleur.

Selon une variante, l'appareil comprend en outre un couvercle intermédiaire entre le capot extérieur et le réflecteur, le couvercle intermédiaire et le réflecteur formant un bouclier thermique entre le capot extérieur et le diffuseur de chaleur. Selon une variante, l'appareil comprend:
- un capot extérieur supérieur et un capot extérieur inférieur, chaque capot extérieur comprenant, en direction de l'autre capot, un couvercle intermédiaire, un réflecteur, un diffuseur de chaleur, un élément chauffant dans le diffuseur de chaleur et une plaque de cuisson, la plaque de cuisson de chaque capot étant en regard de l'autre plaque de cuisson ;
- un unique thermostat associé au capot extérieur supérieur et mesurant la température de la plaque de cuisson respective ou deux thermostat, associés chacun à un capot extérieur, mesurant la température de la plaque de cuisson respective.

Selon une variante, la ou les plaques de cuisson sont amovibles.

Selon une variante, le diffuseur de chaleur est apte à avoir une température en régime de cuisson comprise entre 250°C et 330°C, avec une moyenne comprise entre 270°C et 290°C.

L'invention se rapporte aussi à un procédé de fonctionnement d'un appareil électroménager tel décrit précédemment, comprenant les étapes de :
- montée en température de l'élément chauffant, du diffuseur de chaleur et de la plaque de cuisson ;
- stabilisation de la température du diffuseur de chaleur en régime de cuisson entre 250°C et 330°C, avec une moyenne comprise entre 270°C et 290°C.

Selon une variante, l'appareil électroménager comprend un thermostat régulant la température de la plaque de cuisson, le thermostat régulant l'actionnement de l'élément chauffant.

Selon une variante, le thermostat actionne l'élément chauffant lorsque la température de la plaque de cuisson descend d'environ 15°C en régime de cuisson.

Selon une variante, au cours de l'étape de montée en température de l'élément chauffant, le procédé comprend une première coupure du thermostat, la température de l'élément chauffant montant à une température maximum de 429°C, alors que la plaque de cuisson est à cet instant à une température moyenne de 210°C pour atteindre une température maximum stabilisée à une valeur de 220°C.

L'usage, dans ce document, du verbe « comprendre », de ses variantes, ainsi que ses conjugaisons, ne peut en aucune façon exclure la présence d'éléments autres que ceux mentionnés. L'usage, dans ce document, de l'article indéfini « un », « une », ou de l'article défini « le », « la » ou « l' », pour introduire un élément n'exclut pas la présence d'une pluralité de ces éléments.

Les termes « premier », « deuxième », etc. sont, quant à eux, utilisés dans le cadre de ce document exclusivement pour différencier différents éléments, et ce sans impliquer d'ordre entre ces éléments.

L'ensemble des modes de réalisation préférés ainsi que l'ensemble des avantages de l'appareil électroménager selon l'invention se transposent mutatis mutandis au présent au procédé, et inversement. Les différents modes de réalisation peuvent être considérés seuls ou en combinaison.

### Brève description des figures

D'autres caractéristiques et avantages de la présente invention apparaîtront à la lecture de la description détaillée qui suit pour la compréhension de laquelle on se reportera aux figures annexées qui montrent :
- la figure 1, une vue éclatée d'une partie d'un appareil électroménager selon l'invention ;
- la figure 2, une vue schématique en coupe de l'appareil électroménager selon l'invention ;
- la figure 3 montre un exemple de réalisation du diffuseur de chaleur ;
- la figure 4, un graphique de fonctionnement de l'appareil électroménager.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation de l'invention

L'invention se rapporte à un appareil électroménager comprenant une plaque de cuisson et un élément chauffant de la plaque de cuisson. L'appareil est en particulier caractérisé par un diffuseur de chaleur contre la plaque de cuisson, l'élément chauffant étant agencé dans le diffuseur de chaleur et contre la plaque de cuisson. Le rayonnement de l'élément chauffant est ainsi dirigé dans la plaque de cuisson et dans la masse du diffuseur de chaleur qui la restitue à la plaque de cuisson. L'appareil électroménager permet ainsi de limiter la température d'échauffement au contact de l'appareil, tout en assurant une bonne cuisson des aliments. L'invention propose une nouvelle technologie qui permet de gérer le rayonnement de l'élément chauffant, limite le rayonnement vers les autres parois internes de l'appareil, et canalise les flux thermiques vers la ou les plaques de cuisson. Le rendement de l'appareil est fortement amélioré et sa régulation est mieux maîtrisée.

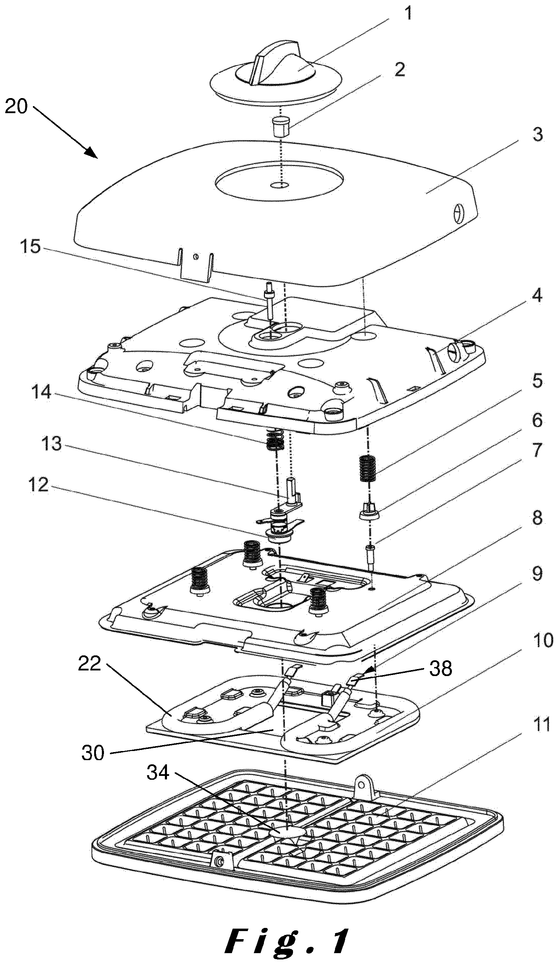

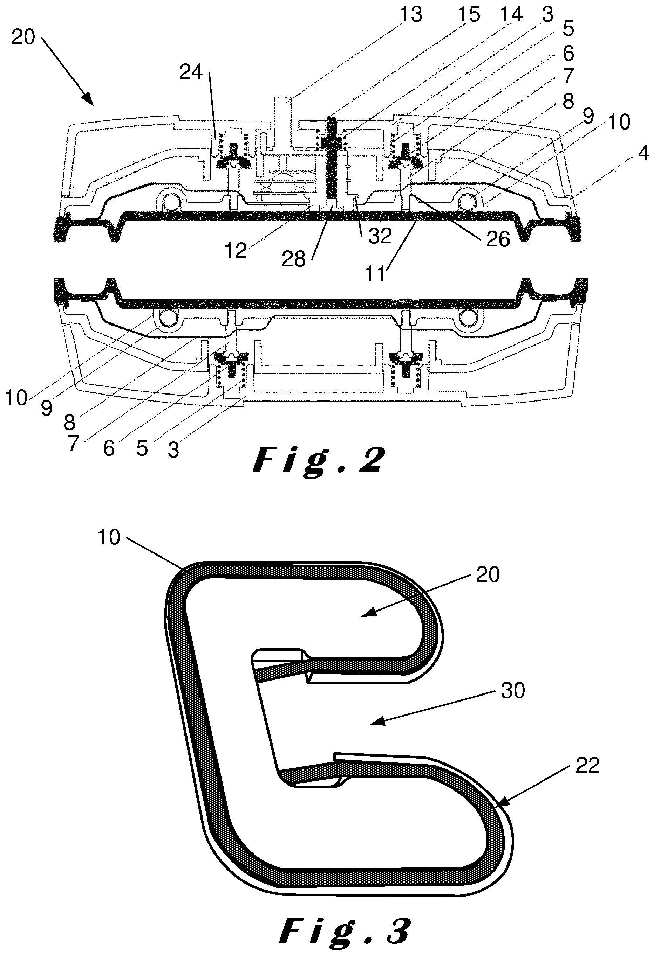

La figure 1 illustre une vue éclatée d'une partie d'un appareil électroménager 20 selon l'invention. La figure 2 illustre une vue schématique en coupe de l'appareil 20. L'appareil 20 peut comporter deux coques ou partie en regard symétriques, comme illustré sur la figure 2 ou bien une seule coque . Dans la suite de la description, il sera fait indistinctement référence aux deux figures. L'appareil 20 comprend une plaque de cuisson 11 adaptée à être en contact des aliments à cuire et un diffuseur de chaleur 10 contre la plaque de cuisson 11. L'appareil comprend aussi un élément chauffant 9 dans le diffuseur de chaleur 10 et contre la plaque de cuisson 11. En d'autres termes, l'élément chauffant 9 est encastré dans le diffuseur de chaleur 10 et contre la plaque de cuisson 11. L'élément chauffant 9 est par exemple un tube chauffant. Une partie du rayonnement de l'élément chauffant 9 est directement transmise dans la masse du diffuseur de chaleur 10 par contact entre une partie de la surface de l'élément chauffant 9 et le diffuseur de chaleur 10. Une autre partie du rayonnement de l'élément chauffant 9 est directement transmise à la plaque de cuisson 11 par contact entre une partie de la surface de l'élément chauffant 9 et la plaque de cuisson 11. Ainsi, le rayonnement de l'élément chauffant 9 en forme de tube est dirigé directement dans la masse du diffuseur de chaleur 10 et dans la plaque de cuisson 11. La surface supérieure de l'élément chauffant étant positionnée contre la plaque de cuisson, l'élément chauffant 9 diffuse sa chaleur directement dans la plaque de cuisson et également dans le diffuseur qui assure une répartition des calories sur toute sa surface en contact avec la plaque de cuisson. On obtient donc un rayonnement maitrisé et canalisé. L'élément chauffant 9 et le diffuseur de chaleur 10 sont au contact de la plaque de cuisson 11 mais sont indépendants de la plaque de cuisson 11. De préférence, l'élément chauffant 9 et le diffuseur de chaleur 10 ne sont pas mécaniquement fixés à la plaque de cuisson 11 - ce qui facilite l'entretien de l'appareil et le désassemblage de la plaque de cuisson pour son entretien plus sécurisé.

En outre, le diffuseur de chaleur 10 étant contre la plaque de cuisson 11, le diffuseur de chaleur 10 restitue une partie de la chaleur à la plaque de cuisson 11 de manière répartie. La chaleur étant mieux restituée à la plaque de cuisson 11, la montée en température de la plaque de cuisson 11 est très rapide, avec un gain de 20% sur le temps de mise en service de l'appareil 20.

La figure 3 montre un exemple de réalisation du diffuseur de chaleur 10. Le diffuseur de chaleur 10 peut être sous une forme de plaque, la figure 3 montrant la face du diffuseur de chaleur 10 en contact de la plaque de cuisson 11 - en particulier le verso de la plaque de cuisson 11. Le diffuseur de chaleur 10 est par exemple en aluminium, ce qui permet de monter rapidement en température. Le diffuseur de chaleur 10 peut comporter une gorge 22 dans la plaque, avec une ouverture en direction de la plaque de cuisson 11. L'élément chauffant 9 est dans la gorge 22 qui peut présenter une section en U. L'élément chauffant 9 est encastré et fixé mécaniquement dans le diffuseur de chaleur 10. Une fois le diffuseur de chaleur 10 pourvu de l'élément chauffant 9 en place dans l'appareil 20, l'élément chauffant 9 est contre la plaque de cuisson 11 au travers de l'ouverture de la gorge. Ainsi, le rayonnement de l'élément chauffant 9 est directement transmis par contact au diffuseur de chaleur 10 sur plus de 50% de la surface de l'élément chauffant 9. Le reste de la surface de l'élément chauffant 9 rayonne en partie sur le haut des parois de la gorge en U et la partie supérieure de l'élément chauffant 9 rayonne directement sur le verso de la plaque de cuisson 11. L'élément chauffant 9 peut être serti dans le diffuseur de chaleur 10 à l'intérieur de la gorge 22 en U dont l'ouverture est dirigée vers la plaque de cuisson 11. Un sertissage mécanique assure le maintien en place de l'élément chauffant 9 tout en permettant sa dilatation dimensionnelle en fonction de sa température.

L'élément chauffant 9 peut présenter la forme d'un serpentin dont la conformation est choisie pour parcourir une grande partie du verso de la plaque de cuisson 11 afin de répartir le rayonnement sur la plaque de cuisson 11. La forme de serpentin suivie par la gorge 22 permet aussi de rayonner sur une surface plus importante du diffuseur de chaleur 10. L'élément chauffant 9 peut être un tube chauffant. L'élément chauffant 9 peut être un tube en SS304 comportant un fil chauffant d'une famille d'alliages fer-chrome-aluminium (par exemple le Kanthal - marque déposée) avec une isolation en poudre de magnésie.

L'appareil 20 peut comporter une plaque de cuisson 11. De préférence, l'appareil 20 peut comporter deux plaques de cuisson 11 en regard afin d'enserrer les aliments lors de la cuisson. De préférence les plaques de cuisson 11 sont amovibles ce qui permet de les nettoyer facilement et/ou de les changer pour d'autres plaques propres à d'autres types d'aliment. Par exemple, l'appareil 20 permet l'utilisation de plaques différentes en forme de gaufres, de croque-monsieur, de cornet de glace, de gaufrettes, de plaque de grillade, plaque de teppanyaki ou plancha etc... On peut envisager huit types de plaques différentes. Les plaques sont facilement interchangeables à l'aide d'un simple outil (pièce de monnaie, etc..). La réponse thermique des plaques est très performante, alors même que les plaques sont amovibles, contrairement aux appareils existants dans lesquels une réponse thermique rapide des plaques de cuisson est obtenue par intégration de l'élément chauffant dans la plaque de cuisson par surmoulage - ce qui impose que les plaques de cuisson soient fixes dans l'appareil, rendant le nettoyage de la zone de cuisson compliqué et les plaques de cuisson non-interchangeables. Par ailleurs, l'invention peut s'adapter à des appareils existants. Les dimensions de l'appareil ne sont pas modifiées, et il n'est pas nécessaire de modifier les plaques de cuisson existantes - qui peuvent donc être utilisées dans l'appareil selon l'invention.

Les plaques sont réalisées en aluminium injecté ou coulé dont la masse en aluminium représente un réservoir énergétique telle qu'il assure une réponse optimum de cuisson. Les plaques peuvent être revêtues d'une couche anti-adhérente sur la face en contact des aliments afin que ces derniers n'adhèrent pas à la plaque lors de la cuisson. Les plaques de cuisson peuvent recevoir des aliments à cuire sous forme déjà solide (tels que croque-monsieur), ou qui seront conformés en cuisant (tels que des pâtons ou de la pâte à gaufre). En outre, la périphérie des plaques permet d'absorber un excès éventuel d'aliment durant la cuisson ; par exemple, les plaques de cuisson comportent une périphérie d'empreintes de gaufre avec une large surface qui permet d'absorber l'excès éventuelle de pâte évitant ainsi le débordement en dehors de l'appareil.

L'appareil 20 comporte un capot extérieur 3 ou plus spécifiquement un capot extérieur 3 supérieur et un capot extérieur 3 inférieur. Le matériau des capots extérieurs 3 est par exemple en phénol PF2A. Les capots extérieurs 3 délimitent les coques ou parties supérieure et inférieure. A partir d'un capot extérieur se trouvent dans l'ordre, le diffuseur de chaleur 10, l'élément chauffant 9 et la plaque de cuisson 11. Lorsque les coques sont superposées, les plaques de cuisson 11 sont en regard et les capots extérieurs 3 forment l'extérieur (ou paroi) de l'appareil 20. L'appareil 20 peut reposer sur le capot extérieur 3 inférieur durant la cuisson.

L'appareil 20 comporte en outre un réflecteur 8 de chaleur, le diffuseur de chaleur 10 étant agencé entre la plaque de cuisson 11 et le réflecteur 8 de chaleur. Le réflecteur 8 de chaleur est entre le capot extérieur 3 et le diffuseur de chaleur 10. Le réflecteur 8 forme un écran thermique entre le capot extérieur 3 et le diffuseur de chaleur 10. En d'autres termes, le réflecteur 8 constitue un écran thermique entre la zone où est localisé le diffuseur de chaleur 10 et la zone supérieure de l'appareil 20. Ainsi, le rayonnement de l'élément chauffant 9 est absorbé par le réflecteur 8 et par la surface de la plaque de cuisson 11. Ceci garantit la maîtrise des températures d'échauffement suivant les normes de sécurité harmonisées, telles que EN60335-1 et EN60335-2-9. Grâce à la combinaison du diffuseur de chaleur 10 et le réflecteur 8, on parvient à réduire l'échauffement des capots extérieurs 3, des boutons de thermostat et des poignées de préhension de l'appareil (et plus généralement, la paroi extérieure de l'appareil) en-dessous de valeurs de sécurité. Le réflecteur 8 peut être un réflecteur métallique, en acier laminé aluminisé double face. Il peut s'agir d'une feuille emboutie à forme. Le réflecteur 8 métallique peut être revêtu d'une couche d'aluminium. Ce revêtement réfléchit une partie de la chaleur émise par le réflecteur vers la plaque de cuisson. En outre, l'élément chauffant 9 comporte des bornes 38 qui s'étendent au travers du réflecteur 8 - ce qui facilite la connexion électrique des bornes plus simple.

L'appareil 20 comporte en outre un couvercle intermédiaire ou couvercle médian 4. Le matériau du couvercle intermédiaire 4 est par exemple en phénol PF2A. Le couvercle intermédiaire 4 est entre le capot extérieur 3 et le réflecteur 8. Le couvercle intermédiaire 4 et le réflecteur 8 formant un bouclier thermique sont entre le capot extérieur 3 et le diffuseur de chaleur 10. Le couvercle intermédiaire 4 renforce l'écran thermique constitué par le réflecteur 8, pour former un bouclier thermique permettant de protéger le capot extérieur 3 du rayonnement. Ceci garantit un échauffement des parois de l'appareil accessibles par l'utilisateur très en dessous des valeurs limites imposées par les normes de sécurité, européennes notamment.

L'élément chauffant 9 dans le diffuseur de chaleur forment ensemble un système de chauffe par conduction au moyen du diffuseur. Ce système peut être utilisé dans un appareil électroménager muni d'une plaque de cuisson amovible. En outre, le couvercle intermédiaire 4 et le réflecteur 8 forment un bouclier thermique du système de chauffe, permettant de réduire l'échauffement des parois extérieures de l'appareil électroménager.

Selon les figures 1 et 2, l'appareil 20 comporte des ressorts 5 de compression du diffuseur de chaleur 10 contre la plaque de cuisson 11. Les ressorts 5 favorisent une transmission thermique directe entre d'une part le diffuseur de chaleur 10 et l'élément chauffant 9 et d'autre part la plaque de cuisson 11. L'énergie calorifique est ainsi concentrée directement sur les plaques de cuisson 11 et dans une moindre mesure, indirectement sur les parois et les éléments périphériques internes de l'appareil 20. Le nombre de ressorts 5 est choisi pour assurer un bon contact entre le diffuseur de chaleur 10 et la plaque de cuisson 11. Les ressorts peuvent être au nombre de deux, trois ou plus, de préférence quatre selon les figures. Cela permet d'appliquer une force répartie sur le diffuseur de chaleur 10. Les ressorts 5 sollicitent chacun une colonne de guidage 7 contre le diffuseur de chaleur 10. Les colonnes de guidage 7 permettent de transmettre la sollicitation des ressorts 5 au diffuseur de chaleur 10 au travers du réflecteur 8. Les ressorts 5 sollicitent chacun une colonne de guidage 7 par l'intermédiaire d'une entretoise 6, de préférence en céramique. Les entretoises 6 assurent la liaison mécanique entre les ressorts 5 et les colonnes de guidage 7 du diffuseur de chaleur 10. Les entretoises 6 préservent les ressorts 5 de compression de toute transmission thermique des colonnes de guidage 7 dont la température est équivalente à la température du diffuseur 10.

Les ressorts 5 peuvent être calculés pour générer une pression d'environ 10 N sous une compression de 5mm. Les ressorts 5 peuvent être en acier Inox SUS304. Cette course est ajustée par la longueur définie du cylindre des colonnes de guidage 7. La course de déplacement est limitée par la tête des colonnes de guidage 7 qui viennent en butée sur le réflecteur 8. Les capots extérieurs 3 peuvent comporter des logements 24 constituant les sièges des ressorts 5 de pression du diffuseur de chaleur 10. Les colonnes de guidage 7 maintiennent en place le diffuseur 10 et l'élément chauffant 9. Ainsi, le diffuseur de chaleur 10 et l'élément chauffant 9 sont tenus en place par le capot extérieur 3 via les entretoises 6 isolantes, et non pas par le réflecteur 8. Ceci évite que le réflecteur 8 chauffe et rayonne dans toutes les directions dans l'appareil. Ceci réduit l'échauffement de la paroi extérieure de l'appareil 20.

Les colonnes 7 de guidage (acier de décolletage) comportent un épaulement 26 et sont vissées dans le diffuseur de chaleur 10 pour en limiter le déplacement. Lors de la pose des plaques de cuisson 11 sur l'appareil 20, le diffuseur de chaleur 10 comprime les ressorts 5 qui transmettent et appliquent une pression du diffuseur 10 sur la plaque de cuisson 11, par exemple d'environ 10 N. Ceci permet d'obtenir une transmission directe des calories de l'élément chauffant 9 par conduction dans le diffuseur 10 et aussi par rayonnement de sa surface libre directement dans la plaque de cuisson 11.

L'appareil est muni d'un thermostat 13. Le thermostat 13 régule la température suivant le position d'un bouton de thermostat actionné par l'usager en fonction des différents type d'aliments. Ceci permet de contrôler la montée en température de la plaque de cuisson 11 et de réguler au mieux la température de la plaque de cuisson 11 durant la période de cuisson. Le thermostat 13 est par exemple un thermostat mécanique à bimétal ou lames bimétal.

Le thermostat 13 comprend un bulbe 12 avec un évidement 28 central qui assure une meilleure variation de la température avec la plaque de cuisson 11. Le bulbe 12 peut être en aluminium. La masse du bulbe 12 est adaptée pour assurer un équilibre de température de transmission entre la plaque de cuisson 11 et le bimétal qui actionne l'ouverture et la fermeture des contacts d'un interrupteur du thermostat 13. Le bulbe 12 est solidaire de l'élément bimétal et lui transmet les variations thermiques de la plaque. Ainsi, le bimétal s'incurve plus ou moins suivant les variations de température de la plaque. Cette déflection agit sur un mécanisme de ressort qui provoque la fermeture ou l'ouverture des contacts de l'interrupteur du thermostat. Cet interrupteur est inséré dans le circuit électrique qui alimente l'élément chauffant. Le bulbe 12 est solidaire mécaniquement du bloc thermostatique ou thermostat 13 et est positionné contre la zone arrière du bimétal pour assurer une transmission ou réponse thermique optimum.

Une zone est réservée au centre du diffuseur de chaleur 10 permettant le passage du thermostat et son mécanisme, notamment le bulbe 12. Ainsi, le diffuseur de chaleur 10 ne rayonne pas directement sur le bimétal du thermostat 13 ni sur son bulbe 12 qui est en partie protégé par le réflecteur 8. Ainsi, le thermostat 13 s'étend au travers d'un passage 30 dans le diffuseur de chaleur 10. Le passage 30 peut être circonscrit par le diffuseur de chaleur 10 comme représenté sur la figure 1 ou peut être un passage ouvert comme sur la figure 3. Le passage 30 est central dans le diffuseur de chaleur 10 de sorte à contrôler la température au centre de la plaque de cuisson 11. Ceci permet de connaître la température de la plaque de cuisson 11 en une position où les déperditions de chaleur vers l'extérieur de l'appareil 20 sont les plus faibles.

Le thermostat 13 peut être supporté par un axe 15 qui est fixé mécaniquement dans le capot extérieur 3. L'axe 15 de support du bloc thermostat 13 peut être métallique. L'axe 15 assure le positionnement du thermostat 13 dans l'appareil afin d'assurer un bon contrôle de la température des plaques de cuisson - et donc de la cuisson. Un ressort 14 (par exemple en acier) peut être placé sur l'axe 15 et applique une pression continue sur le thermostat 13 enfilé par-dessus. Lorsque la plaque de cuisson 11 est fixée à l'appareil 20, le bulbe 12 est mis en pression contre la plaque de cuisson 11, en particulier contre une zone centrale 34 de la plaque. Cette pression permet d'assurer la bonne régulation thermique de la plaque de cuisson. Par ailleurs, lorsque la plaque de cuisson 11 est retirée pour être changée ou nettoyée, le bulbe 12 du thermostat 13 est muni d'un épaulement 32 qui limite sa course dès qu'il rentre en contact avec le réflecteur 8.

L'appareil 20 peut en outre comprendre un bouton 1 de commande permettant de sélectionner le niveau de température de la plaque de cuisson en fonction des aliments à cuire. Une graduation est présente sur une collerette entourant le bouton 1 et qui permet à l'utilisateur d'avoir un repère sur son choix de cuisson. Ce choix reste bien entendu dans la plage de température de fonctionnement calibré par les caractéristiques du thermostat.. Une entretoise 2 isolante de liaison (par exemple en PPS) est entre l'axe du thermostat et le bouton de commande 1. L'entretoise 2 forme une pièce intermédiaire permettant de réduire l'échauffement du bouton 1.

Le diffuseur de chaleur 10 et le thermostat 13 assurent une réaction rapide pour le maintien de la température dans une plage plus étroite. Ceci permet d'obtenir des cuissons de qualité avec un gain de temps de plus de 50% de 5 minutes à moins de 2 minutes pour cuire 2 pâtons de 110 gr. Ainsi, les cuissons peuvent se suivre sans délai en assurant le même niveau de qualité et de rapidité.

L'appareil 20 assure une bonne stabilité thermique. En effet, le diffuseur de chaleur 10 est apte à avoir une température en régime de cuisson comprise entre 250°C et 330°C. En particulier, en régime de travail ou cuisson, la température moyenne du diffuseur 10 est entre 270°C et 290°C pour une température maximum moyenne de la plaque de cuisson 11 d'environ 210°C, inférieure à 220°C (bouton 1 en position maximum). Le diffuseur de chaleur 10 permet donc de respecter les valeurs d'échauffement des parois de contact imposées par les normes. En outre, la mise en service de l'appareil 20 est rapide.

Le diffuseur de chaleur 10 ne rentre pas en contact avec le réflecteur 8, mais uniquement avec la plaque de cuisson 11. L'élément chauffant 9 n'est pas localisé dans un embouti du réflecteur 8 ce qui évite de porter la température du réflecteur à des valeurs très élevées et donc de gérer les températures d'échauffement des parois extérieures de l'appareil. En d'autres termes, l'appareil 20 permet de respecter les valeurs d'échauffement des parois extérieures de l'appareil 20, contrairement aux appareils existants où, en l'absence du diffuseur de chaleur, l'élément chauffant de 700°C supporté directement par le réflecteur rayonne de façon très intense dans tout l'appareil.

L'appareil est par exemple un gaufrier ou un appareil à croque-monsieur - ou autre selon le type de plaques de cuisson utilisées et indiquées ci-dessus. La description ci-dessus a été faite sur une moitié d'appareil - par exemple un demi-gaufrier. Toutefois, l'autre partie d'appareil, par exemple la partie ou coque inférieure est de construction identique mécaniquement et thermiquement à la partie ou coque supérieure, mais la régulation est assurée par le thermostat placé dans la partie supérieure. Ainsi, l'appareil 20 comprend le capot extérieur 3 supérieur et un capot extérieur 3 inférieur, chaque capot extérieur 3 comprenant, en direction de l'autre capot, un couvercle intermédiaire 4, un réflecteur 8, un diffuseur de chaleur 10, un élément chauffant 9 dans le diffuseur de chaleur et une plaque de cuisson 11, la plaque de cuisson de chaque capot étant en regard de l'autre plaque de cuisson, l'appareil électroménager comprenant en outre un unique thermostat 13 associé au capot extérieur supérieur et mesurant la température de la plaque de cuisson respective ou deux thermostats, associés chacun à un capot extérieur, mesurant la température de la plaque de cuisson respective. Il est donc envisageable que l'appareil 20 soit pourvu d'un thermostat dans chaque partie de l'appareil. Seul le schéma électrique de raccordement diffère. Le capot supérieur 3 avec passage du thermostat 13 est utilisé pour la partie inférieure en lieu et place du capot inférieur totalement fermé comme représenté sur la figure 2. Les deux parties ou coques peuvent être articulées l'une à l'autre, par exemple en rabattant la partie supérieure sur la partie inférieure pour effectuer la cuisson.

L'invention se rapporte aussi à un procédé de fonctionnement de l'appareil 20 électroménager. Le procédé comprend une étape de montée en température de l'élément chauffant 9, du diffuseur de chaleur 10 et de la plaque de cuisson 11. La présence de l'élément chauffant 9 dans le diffuseur de chaleur 10, l'ensemble étant contre la plaque de cuisson 11 permet une montée en température des plaques de cuisson de manière rapide ; en effet, le rayonnement de l'élément chauffant 9 est maîtrisé et canalisé vers la plaque de cuisson 11 et la chaleur produite par l'élément chauffant est transmise directement vers la plaque de cuisson 11. Puis le procédé comprend une étape de stabilisation de la température du diffuseur de chaleur 10 en régime de cuisson entre 250°C et 330°C, avec une moyenne comprise entre 270°C et 290°C. Ceci assure une maîtrise des températures de contact sur les capots extérieurs 3 (supérieur et inférieur) de l'appareil 20.

A la mise en chauffe de l'appareil 20, la première pointe de température des plaques de cuisson est limitée et confinée sous les 310°C, contrairement aux appareils existants dans lesquels on constate une pointe de température sur la plaque de cuisson proche des 500°C lors du premier cycle de chauffe de l'appareil.

Au cours du procédé de fonctionnement, le thermostat 13 de l'appareil 20 permet une régulation précise de la température de l'appareil en régulant l'élément chauffant 9. Par exemple, au cours de l'étape de montée en température de l'élément chauffant 9, le procédé comprend une première coupure du thermostat, la température de l'élément chauffant montant à sa température maximum de 429°C, alors que les plaques de cuisson sont à cet instant à une température moyenne de 210°C pour atteindre leur température maximum stabilisée à une valeur inférieure à 220°C. La régulation est précise.

Dès la pose des aliments (tels qu'un ou des pâtons) sur la plaque de cuisson 11, celle-ci va subir une chute de température engendrée par les aliments « froids » (tels que la pâte à gaufre « froide »). La grande capacité énergétique de la masse métallique de la plaque 11 (par exemple en aluminium) va assurer un apport direct de calories pour compenser les calories transmises dans les aliments à cuire. Cette construction constitue un réservoir énergétique qui engendre une cuisson adaptée et rapide. L'appareil 20 et son procédé de fonctionnement assurent une meilleure réponse thermique dès la pose des aliments sur la plaque de cuisson (par exemple, le pâton sur la cavité du moule de la plaque de cuisson).

En régime de cuisson, le thermostat 13 actionne l'élément chauffant 9 lorsque la température de la plaque de cuisson 11 baisse d'environ 15°C. Dès que la température des plaques 11 descend d'environ 15°C, le bulbe 12 du thermostat 13 enregistre cette diminution de température. Le thermostat 13 actionne l'élément chauffant pour remonter la température. Par exemple, le thermostat ferme ses contacts et la température du diffuseur de chaleur 10 remonte instantanément, alimenté par l'élément chauffant. L'énergie ainsi générée avec rapidité sera transmise directement dans la plaque de cuisson 11. Cette réactivité assurée par le diffuseur de chaleur 10 évite toute chute de température importante comme constatée sur tous les appareils existants. La maîtrise du rayonnement thermique interne permet de libérer le thermostat 13 des contraintes qu'il subit dans un appareil dépourvu du diffuseur de chaleur 10. La régulation est ainsi plus précise et la réactivité du thermostat est directement liée aux variations thermiques des plaques de cuisson.

L'appareil 20 électroménager et le procédé de fonctionnement permettent d'obtenir une cuisson homogène et de qualité. Le temps de cuisson est optimal et inférieur aux appareils existants. Ceci permet d'atteindre une cadence de cuisson soutenue à qualité équivalente.

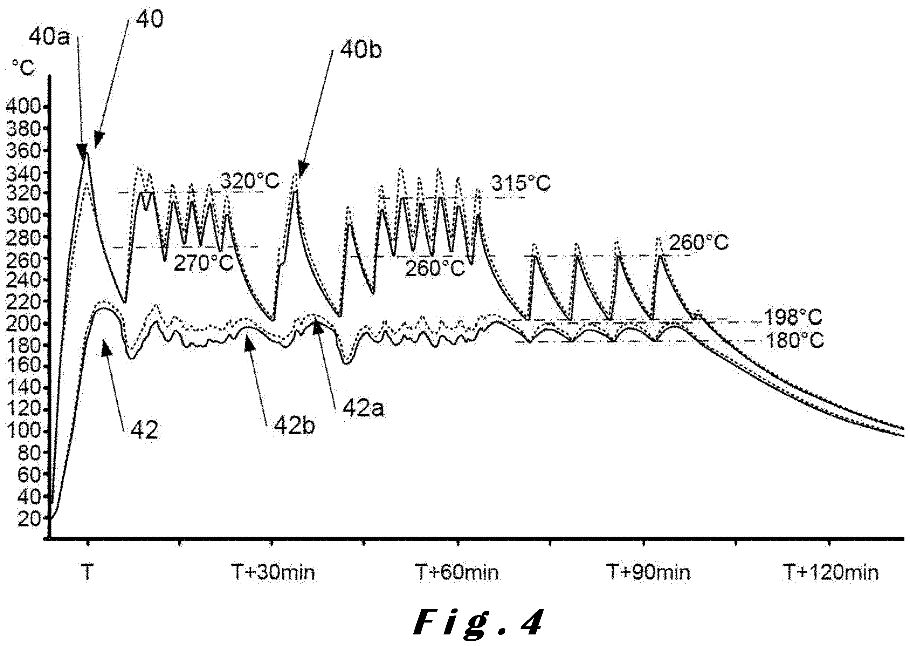

La figure 4 est un graphique de fonctionnement de l'appareil électroménager. Le graphique montre la température (ordonnées) en fonction du temps (abscisses) du diffuseur de chaleur 10 (courbe 40) et de la plaque de cuisson 11 (courbe 42). Les courbes 40 et 42 sont chacune des doubles courbes, pour indiquer la température du diffuseur de chaleur 10 des parties supérieure et inférieure (références 40a et 40b) de l'appareil 20 ainsi que la température de la plaque de cuisson 11 des parties supérieure et inférieure de l'appareil 20 (références 42a et 42b).

A la mise en service de l'appareil 20, pendant quelques minutes, jusqu'au temps T, les courbes 40 et 42 montent fortement pour indiquer la montée en température de l'appareil - qui est faite rapidement.

Puis, entre T et T+30 min, les courbes 40, 42 de température des diffuseurs de chaleur 10 et des plaques de cuisson 11 se stabilisent entre 270-320°C et 180-198°C respectivement. L'appareil est en régime de cuisson. Les différents pics des courbes 40a et 40b correspondent à des montées en température du diffuseur de chaleur 10 suite à la dépose sur les plaques de cuisson 11 d'un nouvel aliment tel qu'un pâton à cuire. On constate que la courbe 42 reste stable, avec une variation de 20°C - ce qui favorise une bonne cuisson. La puissance déployée est par exemple de 1200W. La première pointe de température des plaques de cuisson est ainsi limitée et confinée sous les 310°C avec l'appareil 20, contrairement aux appareils existants dans lesquels on constate une pointe de température sur la plaque de cuisson proche des 500°C lors du premier cycle de chauffe de l'appareil. Également, durant la cuisson, la température des plaques de cuisson reste inférieure à 220°C.

A T+30min, l'appareil est chargé de deux pâtons provoquant une chute des courbes 40 et 42. La remontée en température des diffuseur est extrêmement rapide ce qui évite que la température des plaques de cuisson ne descende sous les 160°C et pour remonter rapidement.

Entre T+30min et environ T+75min, les courbes 40, 42 de température des diffuseurs de chaleur 10 et des plaques de cuisson 11 se stabilisent entre 260-315°C et 180-198°C respectivement. L'appareil est en régime de cuisson. A nouveau, les différents pics des courbes 40a et 40b correspondent à des montées en température du diffuseur de chaleur 10 suite à la dépose sur les plaques de cuisson 11 d'un nouvel aliment tel qu'un pâton à cuire. On constate que la courbe 42 reste stable, avec une variation de 20°C - ce qui favorise une bonne cuisson. La puissance déployée est par exemple de de 1400W. A nouveau, durant la cuisson, la température des plaques de cuisson reste inférieure à 220°C.

A environ T+75min, on arrête de mettre des aliments tels que des pâtons à cuire.

Entre environ T+75min et environ T+90min, les courbes 40, 42 de température des diffuseurs de chaleur 10 et des plaques de cuisson 11 se stabilisent entre 200-260°C et 180-198°C respectivement - sans la présence d'aliments tels que des pâtons à cuire. Les pics de la courbe 40 indiquent le maintien périodique de la température des diffuseurs de chaleur 10, permettant de conserver encore les plaques de cuisson 11 à une température stable. La puissance déployée est par exemple de 1400W.

Entre environ T+90min et T+150min, l'appareil 20 est coupé, provoquant le refroidissement des diffuseurs de chaleur 10 et des plaques de cuisson 11. Les courbes 40, 42 décroissent.

La figure 4 montre que la mise en service est rapide et que la température des plaques de cuisson 11 est très stable - permettant une cuisson homogène et de qualité - ou qui se stabilise rapidement - permettant une cadence de cuisson soutenu à qualité équivalente. Entre outre, l'appareil au cours de son fonctionnement offre une meilleure réponse thermique dès la pose des aliments (tels que du pâton) sur la plaque de cuisson.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est pas limitée aux exemples illustrés et/ou décrits ci-dessus.

## Revendications

1. Appareil (20) électroménager comprenant :
- une plaque de cuisson (11), et
- un élément chauffant (9) de la plaque de cuisson (11),
**caractérisé en ce que**
l'appareil (20) comprend en outre un diffuseur de chaleur (10) contre la plaque de cuisson (11), l'élément chauffant (9) étant agencé dans le diffuseur de chaleur (10) et contre la plaque de cuisson (11).

2. Appareil (20) électroménager selon la revendication précédente, dans lequel le diffuseur de chaleur (10) comporte une gorge (22) avec une ouverture en direction de la plaque de cuisson (11), l'élément chauffant (9) étant dans la gorge et contre la plaque de cuisson au travers de l'ouverture de la gorge.

3. Appareil (20) électroménager selon l'une des revendications précédentes, dans lequel le diffuseur de chaleur (10) est en aluminium.

4. Appareil (20) électroménager selon l'une des revendications précédentes, dans lequel l'élément chauffant (9) est serti dans le diffuseur de chaleur.

5. Appareil (20) électroménager selon l'une des revendications précédentes, comprenant en outre des ressorts (5) sollicitant le diffuseur de chaleur (10) contre la plaque de cuisson (11).

6. Appareil (20) électroménager selon la revendication précédente, dans lequel les ressorts (5) sollicitent chacun une colonne de guidage (7) contre le diffuseur de chaleur (10) par l'intermédiaire d'une entretoise (6), de préférence en céramique.

7. Appareil (20) électroménager selon l'une des revendications précédentes, comprenant en outre un thermostat (13) régulant la température de la plaque de cuisson, le thermostat s'étendant au travers d'un passage dans le diffuseur de chaleur (10).

8. Appareil (20) électroménager selon la revendication précédente, dans lequel le thermostat (13) comporte un bulbe (12) avec un évidement central, le bulbe étant en pression contre la plaque de cuisson (11).

9. Appareil (20) selon la revendication précédente, comprenant un axe (15) supportant le thermostat (13) et un ressort (14) sollicitant le thermostat (13) en direction de la plaque de cuisson, le bulbe (12) étant mis en pression contre une zone centrale de la plaque de cuisson (11).

10. Appareil (20) selon l'une des revendications précédentes, comprenant en outre un réflecteur (8) de chaleur, le diffuseur de chaleur (10) étant agencé entre la plaque de cuisson (11) et le réflecteur (8).

11. Appareil (20) selon la revendication précédente, comprenant en outre un capot extérieur (3) dans lequel sont, depuis le capot extérieur, le réflecteur (8), le diffuseur de chaleur (10), l'élément chauffant (9) et la plaque de cuisson (11), le réflecteur (8) formant un écran thermique entre le capot extérieur (3) et le diffuseur de chaleur (10).

12. Appareil (20) selon la revendication précédente, comprenant en outre un couvercle intermédiaire (4) entre le capot extérieur (3) et le réflecteur (8), le couvercle intermédiaire et le réflecteur formant un bouclier thermique entre le capot extérieur (3) et le diffuseur de chaleur (10).

13. Appareil (20) électroménager selon l'une des revendications précédentes, comprenant :
- un capot extérieur (3) supérieur et un capot extérieur inférieur, chaque capot extérieur comprenant, en direction de l'autre capot, un couvercle intermédiaire (4), un réflecteur (8), un diffuseur de chaleur (10), un élément chauffant (9) dans le diffuseur de chaleur et une plaque de cuisson (11), la plaque de cuisson de chaque capot étant en regard de l'autre plaque de cuisson ;
- un unique thermostat (13) associé au capot extérieur (3) supérieur et mesurant la température de la plaque de cuisson respective ou deux thermostat (13), associés chacun à un capot extérieur (3), mesurant la température de la plaque de cuisson respective.

14. Appareil (20) électroménager selon l'une des revendications précédentes, dans lequel la ou les plaques de cuisson (11) sont amovibles.

15. Appareil (20) électroménager selon l'une des revendications précédentes, dans lequel le diffuseur de chaleur est apte à avoir une température en régime de cuisson comprise entre 250°C et 330°C, avec une moyenne comprise entre 270°C et 290°C.

16. Procédé de fonctionnement d'un appareil électroménager selon l'une des revendications précédentes, comprenant les étapes de :
- montée en température de l'élément chauffant (9), du diffuseur de chaleur (10) et de la plaque de cuisson (11) ;
- stabilisation de la température du diffuseur de chaleur en régime de cuisson entre 250°C et 330°C, avec une moyenne comprise entre 270°C et 290°C.

17. Procédé de fonctionnement selon la revendication précédente, l'appareil électroménager comprenant un thermostat (13) régulant la température de la plaque de cuisson (11), le thermostat régulant l'actionnement de l'élément chauffant (9).

18. Procédé de fonctionnement selon la revendication précédente, le thermostat (13) actionnant l'élément chauffant (9) lorsque la température de la plaque de cuisson (11) descend d'environ 15°C en régime de cuisson.

19. Procédé de fonctionnement selon l'une des deux revendications précédentes, au cours de l'étape de montée en température de l'élément chauffant (9), le procédé comprenant une première coupure du thermostat (13), la température de l'élément chauffant (9) montant à une température maximum de 429°C, alors que la plaque de cuisson (11) est à cet instant à une température moyenne de 210°C pour atteindre une température maximum stabilisée à une valeur de 220°C.
